Europäisches Patentamt

European Patent Office

Office européen des brevets

(11) Publication number: **0 089 947**
**B1**

## (12) EUROPEAN PATENT SPECIFICATION

(45) Date of publication of patent specification: **04.03.87**

(21) Application number: **81902719.4**

(22) Date of filing: **25.09.81**

(86) International application number:
**PCT/US81/01307**

(87) International publication number:
**WO 83/01049 31.03.83 Gazette 83/08**

(51) Int. Cl.⁴: **B 64 C 25/16**

�testingNose WHEEL WATER SPRAY DEFLECTOR.

(43) Date of publication of application:
**05.10.83 Bulletin 83/40**

(45) Publication of the grant of the patent:
**04.03.87 Bulletin 87/10**

(84) Designated Contracting States:
**DE FR GB NL SE**

(56) References cited:
**US-A-2 844 339**
**US-A-2 853 307**
**US-A-3 010 682**
**US-A-3 169 001**
**US-A-3 184 189**
**US-A-3 480 237**
**US-A-3 670 996**
**US-A-3 701 500**

**No relevant documents have been disclosed**

(73) Proprietor: **THE BOEING COMPANY**
**P.O. Box 3707 Mail Stop 7E-25**
**Seattle Washington 98124-2207 (US)**

(72) Inventor: **GLASENAPP, Rudi Karl Heinz**
**16105 Southeast 42nd Street**
**Bellevue, WA 98006 (US)**
Inventor: **MCCULLOCH, Andrew John**
**17204 - 128th Avenue Southeast**
**Renton, WA 98055 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

This invention relates to landing gear water spray deflectors and more particularly to a nose wheel water spray deflector for aircraft having a plurality of wing mounted engines and a nose landing gear including a pair of nose wheels, comprising in combination:

a. a nose wheel water spray deflector for preventing side spray of water generated by nose wheels to be ingested in said engines, said deflector mounted in a plane parallel to the runway surface, in the aircraft landing position, and extending forward, left and right side, and partly rearward of said wheels;

b. said deflector mounted by a lateral support member connected between said deflector forward center position and said landing gear strut and by side support members between each deflector right and left side and said wheel associated axle stubs respectively; and

c. wherein said deflector is retractable through said associated nose wheel doorway into said aircraft nose section.

Such a landing gear water spray deflector is disclosed in the patent specification US—3,670,996.

This known landing gear water spray deflector has the drawback that water thrown upwards by the tires has such a great lateral speed component that it moves underneath the deflector and still may be ingested by the aircraft engines.

Therefore, the aim of the present invention is to supply a landing gear water spray deflector which intercepts the water spray having a great lateral speed component so that it is impossible for water thrown upwards by the tyres to reach the aircraft engines.

This aim is reached by a landing gear water spray deflector according to claim 1.

A full understanding of the invention, and of its further advantages and the several unique aspects thereof, will be had from the following description when taken in conjunction with the accompanying drawings in which:

FIGURE 1 is a perspective view showing the present nose wheel water spray deflector apparatus;

FIGURE 2 is a side elevational view of the deflector apparatus of Figure 1;

FIGURE 3 is a front elevational view of the deflector apparatus of Figure 1;

FIGURE 4 is a top view of the deflector apparatus of Figure 1 looking down from the aircraft fuselage with nose landing gear inner cylinder support for the nose wheel pair sectioned; and,

FIGURE 5 is a side elevational view of the nose wheel water spray deflector apparatus of Figure 1 showing the nose gear in solid line in stowed position and in dashed line for deployed position operation.

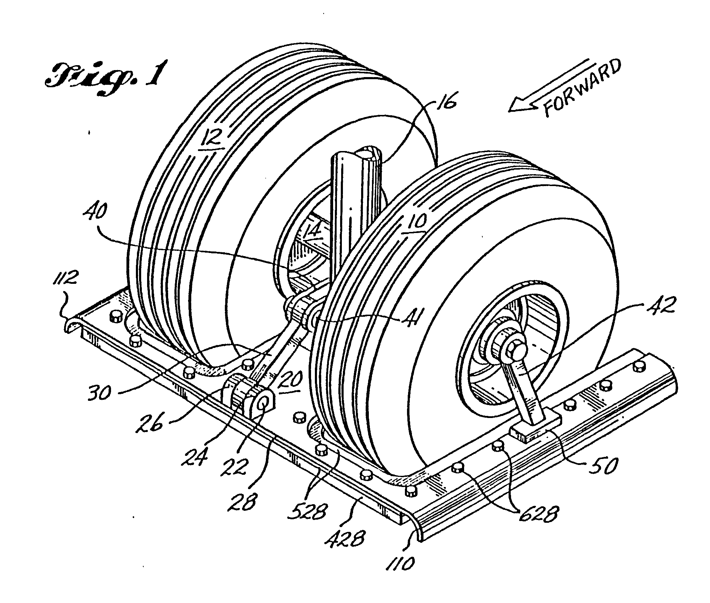

Turning now to Figure 1, it will be seen that nose landing gear inner cylinder 16 carries supportedly fixed thereto axle 14 supporting rotatably mounted thereon in conventional manner a pair of nose gear wheels 10 and 12.

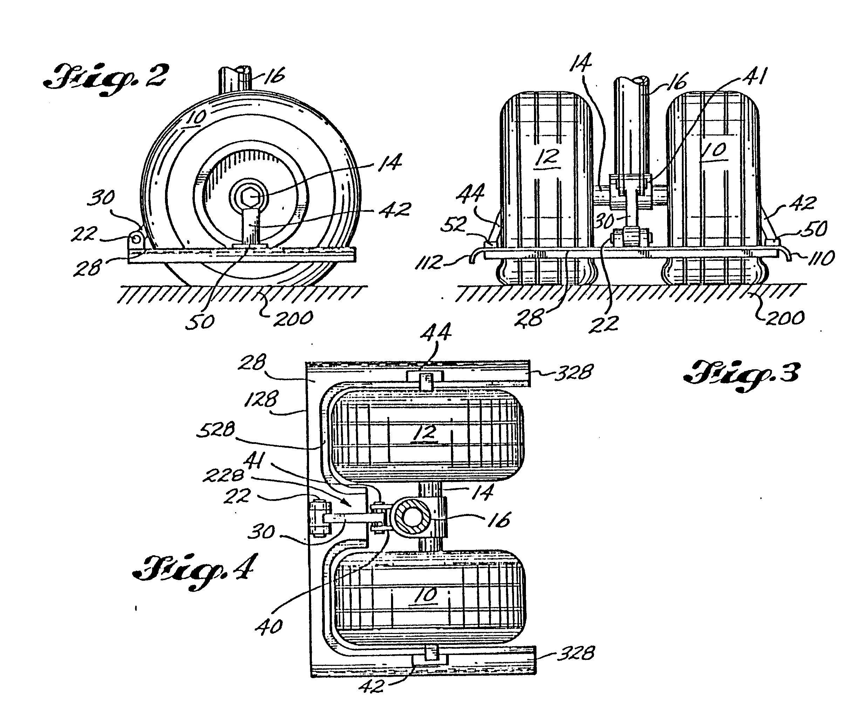

The present nose wheel water spray deflector apparatus 20 includes a lateral support tube member 22 fixed on either end thereof by a pair of flanges 24 and 26 integral with horizontal deflector plate member 28. Center support member 30 provides linkage to connect lateral support tube member 22 with nose gear tow fitting 40 via bolt connection 41. Side support members 42 and 44 (seen in Figure 3), one fixed as by bolting at one end to each side of horizontal deflector plate member 28 at points 50 and 52 (see Figures 3), and with the other ends thereof disposed over axle 14 stubs.

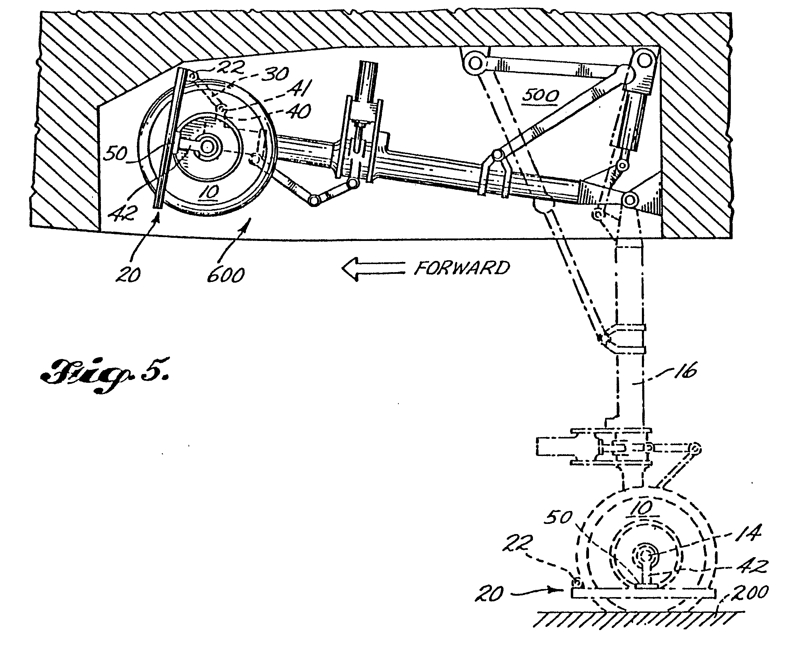

The particular structural configuration of nose wheel water spray deflector apparatus 20 and important geometrical features thereof can be further understood when it is further noted that the leading edge (as observed from the indicated forward direction denoted in Figure 4 by numeral 128) extends beyond the outer front surfaces of nose wheels 10 and 12. It can readily be seen from Figures 1 and 3 that the side edge portions 112 and 110 of horizontal deflector plate member 28 are curved and directed downward toward runway surface 200 (as seen in Figure 3). Besides noting that horizontal deflector plate member 28 extends sideways and ahead of nose wheels 10 and 12, it should be further noted that horizontal deflector plate member 28 extends (where nose landing gear is deployed in the extended condition as shown in Figure 5 by dotted line representation) in a horizontal plane with respect to runway surface 200 and at a predetermined distance above runway surface 200, suspended with the bottom surface thereof about 231 mm (9.1 inches) below the center of axle 14. The inside dimension between side edge portions 112 and 110 of horizontal deflector plate member 28 is about 1156 mm (45.5 inches), and horizontal deflector plate member 28 has a central portion 228 (seen in figure 4) which extends aftwardly between nose wheels 10 and 12 a predetermined distance of about 203 mm (8.0 inches) measured rearwardly from leading edge 128. Side leg portions 328 of horizontal deflector plate member 28 extend aft of leading edge 128 a distance of about 818 mm (32.2 inches). As seen in Figure 1, a flexible pad support member 428 is utilized below horizontal deflector plate member 28 to sandwich reinforced flexible pad member 528 therebetween in a secured condition as by fasteners 628.

As seen from a top view in Figure 4, flexible pad member 528 extends in a horizontal plane around the periphery of horizontal deflector plate member 28 along at least the front and sidewall surface portions of nose wheels 10 and 12 thereby reducing and minimizing the gap between horizontal deflector plate member 28 and the front and sidewall surface portions of nose wheels 10 and 12, the flexibility accommodating deflections and changes in shape and size of tires caused by use. The distance dimension of horizontal deflector plate member 28 from wheel centers provides

# 0 089 947

sufficient ground clearance of member 28 in the event of a flat tire on the nose gear. Figure 5 is deemed helpful in showing how the present nose wheel water spray deflector apparatus 20 as hereinbefore described can be extended for deployment (as in the dotted line representation) or retracted by conventional nose wheel landing gear apparatus 500 into nose gear wheel well 600.

## Claims

1. A nose wheel water spray deflector (20) for aircraft having a plurality of wing mounted engines and a nose landing gear including a pair of nose wheels (10, 12) comprising in combination:

a. a nose wheel water spray deflector (20) for preventing side spray of water generated by nose wheels (10, 12) to be ingested in said engines, said deflector (20) mounted in a plane parallel to the runway surface (200), in the aircraft landing position, and extending forward, left and right side, and partly rearward of said wheels (10, 12);

b. said deflector (20) mounted by a lateral support member (22, 24, 26) connected between said deflector forward center portion and said landing gear strut (30) and by side support members (42, 44) between each deflector right and left side and said wheel associated axle stubs (14) respectively; and

c. wherein said deflector (20) is retractable through said associated nose wheel doorway into said aircraft nose section; and

d. wherein said deflector (20) is characterized by having downward curved right and left sides (110, 112) for deflecting said water spray.

2. A nose wheel water spray deflector according to claim 1, characterized by a mounted flexible pad (528) being mounted onto a deflector plate member (28) of the deflector (20) and extending past said deflector plate member (28) in the direction of said wheels (10, 12) or tires to form a most possible close but controlled gap therebetween, accommodating tire flexibility.

3. A nose wheel water spray deflector wherein said deflector (20) according to claim 1 or 2, being in a plane parallel to the runway surface (200) in the aircraft landing position is further characterized by said plane being at a distance from said runway (200) being predetermined so as to provide sufficient ground clearance in event of flat nose wheel tires.

## Patentansprüche

1. Bugradwasserspritzerdeflektor (20) für ein Flugzeug, das eine Mehrzahl von flügelmontierten Triebwerken und ein Bugfahrwerk hat, welches ein Paar Bugräder (10, 12) aufweist, umfassend in Kombination:

(a) einen Bugradwasserspritzerdeflektor (20) zum Verhindern, daß Seitenspritzer von Wasser, welche durch Bugräder (10, 12) erzeugt werden, in die Triebwerke aufgenommen werden, wobei der Deflektor (20) in einer Ebene montiert ist, die in der Flugzeuglandeposition parallel zu der Rollbahnoberfläche (200) ist und sich bezüglich der Räder (10, 12) nach vorwärts, nach der linken und rechten Seite und teilweise nach rückwärts erstreckt;

(b) wobei der Deflektor (20) mittels eines seitlichen Halteteils (22, 24, 26) befestigt ist, das eine Verbindung zwischen dem vorderen Mittelteil des Deflektors und der Fahrwerkstrebe (30) bildet, und mittels seitlicher Halteteile (42, 44) zwischen jeweils der rechten und linken Seite des Deflektors und dem jeweils zugehörigen Achsenstummel (14); und

(c) wobei der Deflektor (20) durch den zugehörigen Bugradeingang bzw. -ausgang in den Flugzeugbugabschnitt einfahrbar ist; und

(d) wobei der Deflektor (20) dadurch gekennzeichnet ist, daß er nach abwärts gekrümmte rechte und linke Seiten (110, 112) zum Ablenken der Wasserspritzer hat.

2. Bugradwasserspritzerdeflektor nach Anspruch 1, dadurch gekennzeichnet, daß eine angebrachte flexible Unterlage (528) auf einem Deflektorplattenteil (28) des Deflektors (20) befestigt ist und sich in der Richtung der Räder (10, 12) oder Reifen über das Deflektorplattenteil (28) hinaus erstreckt, so daß sie einen möglichst engen jedoch kontrollierten Spalt dazwischen bildet, wodurch die Reifenflexibilität aufgenommen wird.

3. Bugradwasserspritzerdeflektor, bei dem der Deflektor (20) nach Anspruch 1 oder 2 in der Flugzeuglandeposition in einer Ebene ist, die parallel zur Rollbahnoberfläche (200) ist, weiter gekennzeichnet dadurch, daß die Ebene in einem Abstand von der Rollbahn (200) ist, welcher so vorbestimmt ist, daß sich im Falle von platten Bugradreifen ein genügendes Bodenspiel ergibt.

## Revendications

1. Déflecteur antiprojection d'eau (20) pour les roues avant d'un aéronef possédant plusieurs propulseurs montés aux ailes et un atterrisseur avant muni de deux roues avant (10, 12), déflecteur (20) qui:

a. est destiné à empêcher que les projections d'eau latérales, produites par les roues avant (10, 12), n'atteignent les propulseurs et ne soient avalées par ceux-ci, le déflecteur (20) étant monté dans un plan parallèle à la surface de la piste (200), en position d'atterrissage de l'aéronef, et s'étendant à l'avant, du côté gauche, du côté droit et partiellement à l'arrière desdites roues (10, 12);

b. est monté sur l'atterrisseur avant au moyen d'un dispositif de support transerval (22, 24, 26), prévu entre une partie centrale à l'avant du déflecteur et le fût (16) de l'atterrisseur, et de supports transversaux (42, 44), prévus respectivement entre le côté droit et le côté gauche du déflecteur (20) et la fusée d'essieu (14) sur laquelle est montée la roue du côté concerné; le déflecteur (20) étant

c. rétractable dans le nez de l'aéronef à travers l'encadrement de porte des roues avant et

d. caractérisé en ce qu'il possède des bords droit et gauche (110, 112) recourbés vers le bas pour dévier les projections d'eau.

2. Déflecteur selon la revendication 1, caractérisé par une plaque de garnissage (528) en matériau souple et armé, qui est montée sur une plaque (28) constituant l'élément essentiel du déflecteur (20), le garnissage souple débordant de cette plaque (28) en direction des roues (10, 12) ou des pneumatiques, afin de ramener l'intervalle entre le bord du déflecteur avec son garnissage et les surfaces adjacentes des pneumatiques à une valeur aussi faible que possible mais définie, tout en permettant les déformations des pneumatiques.

3. Déflecteur selon la revendication 1 ou 2, dont l'élément essentiel est formé par une plaque (28) située dans un plan parallèle à la surface de la piste (200), à la position d'atterrissage de l'aéronef, caractérisé en ce que ledit plan est situé à une distance prédéterminée de la piste (200), distance qui est choisie pour que le déflecteur (20) possède une garde au sol suffisante au cas où l'un des pneus des roues avant est à plat.

0 089 947

Fig. 1

0 089 947

Fig. 1

Fig. 2

Fig. 3

Fig. 4

2